Europäisches Patentamt

European Patent Office

Office européen des brevets

(19)

(11) Publication number: **0 274 790 B1**

## (12) EUROPEAN PATENT SPECIFICATION

(45) Date of publication of patent specification: **14.08.91**    (51) Int. Cl.⁵: **B65G 47/68**

(21) Application number: **87202491.4**

(22) Date of filing: **11.12.87**

(54) **Device for supplying containers to an apparatus for handling them.**

(30) Priority: **17.12.86 NL 8603212**

(43) Date of publication of application:
**20.07.88 Bulletin 88/29**

(45) Publication of the grant of the patent:
**14.08.91 Bulletin 91/33**

(84) Designated Contracting States:
**BE DE ES FR GB GR IT NL**

(56) References cited:
**DE-A- 1 800 601**
**DE-A- 3 129 389**

(73) Proprietor: **Speciaal-Machinefabriek J.H. van Uitert B.V.**
**Industriestraat 14-16**
**NL-5107 NC Dongen(NL)**

(72) Inventor: **Van Uitert, Johannes Hendrikus**
**Vaartweg 33**
**NL-5109 RB 's-Gravenmoer(NL)**

(74) Representative: **Lips, Hendrik Jan George, Ir. et al**
**HAAGSCH OCTROOIBUREAU Breitnerlaan 146**
**NL-2596 HG Den Haag(NL)**

## Description

The invention relates to a device for supplying containers, in particular bottles, to a handling apparatus, said device comprising at least two endless conveyors, the first one serving to receive said containers in a number of rows and a continuous stationary guide being present above said first conveyor and extending from the one longitudinal side of said conveyor opposite the second conveyor and upstream of this, to the junction with said second conveyor so as to guide said containers laterally with respect to the direction of movement of said first conveyor onto said second conveyor, at least one sensor being present at the junction of the first and second conveyor for determining the lack or presence of bottles and being connected to the drive means controlling the speed of the first conveyor.

Such a device is known by DE-A-3,129,389. By means of this known device the containers which are received by the first conveyor in a number of rows are rearranged such that they are brought onto the second conveyor in one single row. Such an arrangement is suitable when the containers e.g. have to be handled by means of a filling and closing apparatus by which the containers are handled one by one.

Now the object of the invention is to make the device suitable for rearranging containers in such a way that a considerable number of containers can be brought into one apparatus in which the containers are simultaneously treated. Such a device e.g. is a rinsing apparatus. In case of such an apparatus it is of advantage that it is totally filled with containers when it is put into operation to prevent loss of water, energy and cleanser.

According to the invention said object is attained by means of a device being characterized in that said second conveyor is positioned transverse to said first conveyor for bringing a given number of juxtapositioned rows of containers from said first conveyor onto said second conveyor and from this into the handling apparatus, said at least one sensor being positioned near the upstream portion of the junction line between said first and second conveyors.

By means of the device described above the handling apparatus can be filled with containers being supplied to it in a great number of adjacent rows, which number can be considerably larger than the number of rows being present on the first conveyor.

When a considerable number of adjacent rows of containers has to be supplied to the handling apparatus, as is the case when said apparatus e.g. is in the shape of a rinsing apparatus, said first conveyor may comprise two or more juxtaposed conveyor tracks being separately driven, said device being characterized in that the velocity of said juxtaposed conveyor tracks is controlled by a corresponding number of sensors being spaced apart from each other and being positioned at the junction line between said first and second conveyor, in such a way that, as seen in the direction of movement of the first conveyor the first sensor controls the velocity of the conveyor track positioned at the greatest distance from the second conveyor and a succeeding sensor controlling the velocity of the next conveyor track.

According to a further elaboration of the invention it can be provided that the control means between a sensor and the driving means for driving said first conveyor or a conveyor track of this, is executed such that when the sensor does not give a signal to increase the velocity of said first conveyor or of a conveyor track of this the velocity will be decreased.

When no longer a signal is given that the velocity of said first conveyor has to be increased, this means that at the related place no containers are lacking so that it is not necessary that the supply of containers is accelerated.

In that case it might be provided that the control means comprises an adjustable time relay such that decreasing the velocity of the first conveyor or of a conveyor track of this can take place with an adjustable time delay.

By a right choice of the normal and the increased velocity of said first conveyor or of the conveyor tracks of this, in most cases a good supply of containers to the handling apparatus can be obtained although it might be possible to increase the velocity in two or more steps. In that case the velocity of the conveyor is continuously increased when after a given period the sensor is still giving the related signal. In a corresponding way the velocity will be decreased stepwise when the sensor is no longer giving a signal.

To prevent that the handling apparatus operates when this is not necessary and to prevent by this loss of water, energy and cleanser when the handling apparatus is in the shape of a rinsing machine, it can be provided that a sensor is provided upstream of the first conveyor, said sensor determining whether at that place there are still containers which have to be supplied to the handling apparatus, by which sensor the handling apparatus can be shut down when no containers are determined, a time relay being present to delay said shutting down.

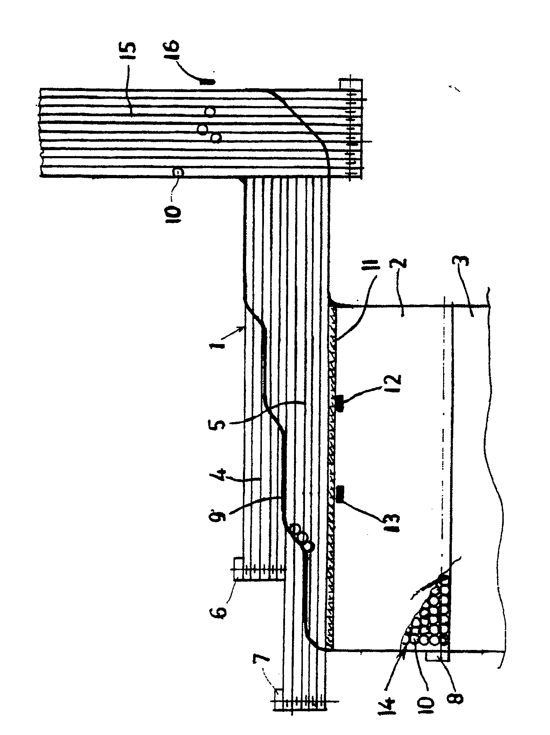

Now the invention is elucidated by means of an embodiment illustrated in the drawing which schematically shows a plan view of the related device.

The shown device comprises a first conveyor 1 and the second conveyor 2 to which second conveyor the rinsing machine 3 is connected which is not shown in detail.

The first conveyor 1 is divided into two conveyor tracks 4 and 5, which are driven by means of the motors 6 and 7 respectively. The conveyor tracks as such may consist of a number juxtapositioned conveyor chains as is usual in many cases and so need not to be described further.

The motor 8 serves for driving the second conveyor 2 and is rotating with a constant speed.

The guiding 9 is positioned above the first conveyor 1 and takes care that the bottles 10, only some of which are shown in the drawing, are guided over the first conveyor 1 to the beginning of the second conveyor 2.

Sensors 12 and 13 are positioned near the transition 11 between the conveyor 1 and 2, the sensor 12 controlling the velocity of the conveyor track 4 and the sensor 13 the velocity of the conveyor track 5.

As already explained above, each of said sensors 12 and 13 will determine whether in its surrounding bottles are present. As long as this is the case the sensors will give no signal and the conveyor tracks 4 and 5 will move with the normal velocity. When by one of the sensors it is determined that at that place bottles are lacking, it will be taken care of that the conveyor track governed by it will move faster by increasing the speed of the related driving motor.

So the bottles 10 will be supplied to the rinsing machine 3 in closed rows as much as possible. A number of bottles supplied in this way is indicated by 14.

In case of the shown embodiment the bottles are supplied to the conveyor 1 by means of the supply conveyor 15. By means of a sensor 16 it is determined whether at that place there are still bottles on the conveyor 5. This not being the case any more, the sensor 16 will give a signal that the rinsing machine 3 can be shut down. Such a signal, however, will be relayed with a given time delay so that shutting down the machine only takes place after e.g. the sensors 12 and 13 have determined the lacking of bottles.

All these possibilities, however, will be obvious for the expert and need no further elucidation.

Further it can be remarked that, in what is said above, the invention is elucidated on the basis of supplying bottles to a rinsing machine but that it is obvious that also other objects can be supplied to other handling machines when in that case the same drawbacks would be present.

## Claims

1. Device for supplying containers, in particular bottles (10), to a handling apparatus (3), said device comprising at least two endless conveyors (1), the first one serving to receive said containers in a number of rows and a continuous stationary guide (9) being present above said first conveyor (1) and extending from the one longitudinal side of said conveyor (1) opposite the second conveyor (2) and upstream of this, to the junction with said second conveyor (2) so as to guide said containers (10) laterally with respect to the direction of movement of said first conveyor (1) onto said second conveyor (2), at least one sensor (13) being present at the junction of the first and second conveyor (1,2) for determining the lack or presence of bottles and being connected to the drive means controlling the speed of the first conveyor (1),
characterized in
that said second conveyor (2) is positioned transverse to said first conveyor (1) for bringing a given number of juxtapositioned rows of containers from said first conveyor (1) onto said second conveyor (2) and from this into the handling apparatus (3), said at least one sensor (12) being positioned near the upstream portion of the junction line between said first and second conveyors (1,2 resp.).

2. Device according to claim 1, in which said first conveyor (1) comprises two or more juxtaposed conveyor tracks (4,5) being separately driven,
characterized in
that the velocity of said juxtaposed conveyor tracks (4,5) is controlled by a corresponding number of sensors (12,13) being spaced apart from each other and being positioned at the junction line between said first and second conveyor (1,2), in such a way that, as seen in the direction of movement of the first conveyor (1) the first sensor (12) controls the velocity of the conveyor track (4) positioned at the greatest distance from the second conveyor (2) and a succeeding sensor (13) controlling the velocity of the next conveyor track (5).

3. Device according to claim 2,
characterized in
that the control means between a sensor (12,13) and the driving means for driving said first conveyor (1) or a conveyor track (4,5) of this, is executed such that when the sensor (12,13) does not give a signal to increase the velocity of said first conveyor (1) or of a conveyor track (4,5) of this the velocity will be decreased.

4. Device according to claim 3,

characterized in
that the control means comprises an adjustable time relay such that decreasing the velocity of the first conveyor (1) or of a conveyor track (4,5) of this can take place with an adjustable time delay.

5. Device according to one of the preceding claims,
characterized in
that a sensor (16) is provided upstream of the first conveyor (1), said sensor (16) determining whether at that place there are still containers (10) which have to be supplied to the handling apparatus (3), by which sensor (16) the handling apparatus (3) can be shut down when no containers are determined, a time relay being present to delay said shutting down.

## Revendications

1. Dispositif pour fournir des récipients, en particulier des bouteilles (10), à un appareil de manipulation (3), ledit dispositif comprenant au moins deux transporteurs circulaires (1), le premier d'entre eux servant à recevoir ces récipients sous la forme d'un certain nombre de rangées, et un guide stationnaire continu (9) situé au-dessus dudit premier transporteur (1) et se prolongeant à partir du côté longitudinal dudit transporteur (1) opposé au second transporteur (2) et en amont de celui-ci, vers la jonction avec ledit second transporteur (2) de façon à guider lesdits récipients (10) latéralement par rapport à la direction de déplacement dudit premier transporteur (1) et les acheminer sur ledit second transporteur (2), au moins un capteur (13) étant présent à la jonction entre les premier et second transporteurs (1,2) pour déterminer l'absence ou la présence de bouteilles et connecté au moyen d'entraînement commandant la vitesse du premier transporteur (1),
caractérisé:
en ce que ledit second transporteur (2) est disposé transversalement par rapport audit premier transporteur (1) pour acheminer un nombre donné de rangées juxtaposées de récipients dudit premier transporteur (1) jusque sur ledit second transporteur (2) et de là, dans l'appareil de manipulation (3), ledit au moins un capteur (12) étant disposé à proximité de la partie amont de la ligne de jonction entre lesdits premier et second transporteurs (respectivement 1 et 2).

2. Dispositif selon la revendication 1, dans lequel ledit premier transporteur (1) comprend deux pistes de transport juxtaposées (4,5) ou davantage, entraînées séparément,
caractérisé:
en ce que la vitesse desdites pistes de transport juxtaposées (4,5) est commandée par un nombre correspondant de capteurs (12,13) espacés les uns des autres et disposés sur la ligne de jonction entre lesdits premier et second transporteurs (1,2), de telle manière que, dans la direction de déplacement du premier transporteur (1), le premier capteur (12) commande la vitesse de la piste de transport (4) se trouvant le plus loin du second transporteur (2) et qu'un capteur suivant (13) commande la vitesse de la piste de transport suivante (5).

3. Dispositif selon la revendication 2, caractérisé:
en ce que le moyen de commande situé entre un capteur (12,13) et le moyen d'entraînement servant à entraîner ledit premier transporteur (1) ou l'une des pistes de transport (4,5) de ce dernier, fonctionne de telle manière que, lorsque le capteur (12,13) ne fournit pas de signal pour augmenter la vitesse dudit premier transporteur (1) ou de l'une des pistes de transport (4,5) de ce dernier, la vitesse diminue.

4. Dispositif selon la revendication 3, caractérisé en ce que le moyen de commande comprend un temporisateur ajustable permettant de réduire la vitesse du premier transporteur (1) ou de l'une des pistes de transport (4,5) de ce dernier, avec un retard ajustable.

5. Dispositif selon l'une des revendications précédentes,
caractérisé:
en ce qu'un capteur (16) est diposé en amont du premier transporteur (1), ledit capteur (16) détectant s'il se trouve encore à cet endroit des récipients (10) qui doivent être acheminés à l'appareil de manipulation (3), ce capteur (16) permettant d'arrêter l'appareil de manipulation (3) lorsque l'absence de récipients est détectée et un temporisateur étant présent pour retarder cet arrêt.

## Patentansprüche

1. Vorrichtung für die Zuführung von Behältern, insbesondere Flaschen, zu einer Behandlungsanlage (3), welche Vorrichtung wenigstens zwei endlose Förderer (1) umfasst, von denen der erste dazu dient die genannten Behälter in einer Anzahl Reihen aufzunehmen und eine kontinuierliche stationäre Führung (9) oberhalb des genannten ersten Förderers (1) vorgesehen ist und sich von der einen Längsseite des Förderers (1) gegenüber dem zweiten Förderer (2) und stromaufwärts desselben zum Uebergang mit dem zweiten Förderer (2) erstreckt um die Behälter (10) seitlich in bezug auf die Bewegungsrichtung des ersten Förderers auf den zweiten Förderer (2) zu führen, wobei wenigstens ein Sensor (13) bei dem Uebergang des ersten und zweiten Förderers (1,2) zur Bestimmung der Ab- oder Anwesenheit von Flaschen vorgesehen ist und mit dem, die Geschwindigkeit des ersten Förderers (1) steuernden Antriebsorgan verbunden ist,
dadurch gekennzeichnet,
dass der zweite Förderer (2) quer zum ersten Förderer (1) angeordnet ist um eine gegebene Anzahl nebeneinander angeordneter Reihen Behälter von dem ersten Förderer (1) auf den zweiten Förderer (2) und von diesem in die Behandlungsanlage (3) zu bringen, wobei wenigstens der eine Sensor (12) nahe dem stromaufwärtsen Teil der Uebergangslinie zwischen dem ersten und zweiten Förderer (1 bzw. 2) vorgesehen ist.

2. Vorrichting nach Anspruch 1, in welcher der erste Förderer (1) wenigstens zwei nebeneinander angeordnete, separat angetriebene Förderbahnen (4,5) umfasst,
dadurch gekennzeichnet,
dass die Geschwindigkeit der nebeneinander angeordneten Förderbahnen (4,5) durch eine entsprechende Anzahl Sensoren (12,13) gesteuert wird, die sich in einem Abstand voneinander befinden und bei der Uebergangslinie zwischen dem ersten und zweiten Förderer (1,2) derart vorgesehen sind, dass in der Fortbewegungsrichtung des ersten Förderers (1) gesehen der erste Sensor (12) die Geschwindigkeit der in dem grössten Abstand von dem zweiten Förderer (2) angeordneten Förderbahn (4) steuert und ein darauffolgender Sensor (3) die Geschwindigkeit der folgenden Förderbahn (5) steuert.

3. Vorrichtung nach Anspruch 2,
dadurch gekennzeichnet,
dass das Steuerorgan zwischen einem Sensor (12,13) und dem Antriebsorgan zum Antreiben des ersten Förderers (1) oder einer Förderbahn (4,5) desselben derart ausgebildet ist, dass wenn der Sensor (12,13) kein Signal gibt die Geschwindigkeit des ersten Förderers (1) oder einer Förderbahn (4,5) desselben zu erhöhen, die Geschwindigkeit herabgesetzt werden wird.

4. Vorrichting nach Anspruch 3,
dadurch gekennzeichnet,

dass das Steuerorgan ein einstellbares Zeitrelais umfasst derart, dass Herabsetzung der Geschwindigkeit des ersten Förderers (1) oder einer Förderbahn (4,5) desselben mit einer einstellbaren Zeitverzögerung erfolgen kann.

5. Vorrichting nach einem der vorangehenden Ansprüche,
dadurch gekennzeichnet,
dass ein Sensor (16) stromaufwärts vom ersten Förderer (1) vorgesehen ist, wobei dieser Sensor (16) feststellt ob an dieser Stelle noch Behälter (10) vorhanden sind, die der Behandlungsanlage (3) zuzuführen sind, wobei dieser Sensor (16) die Behandlungsanlage (3) ausschalten kann, wenn keine Behälter beobachtet werden, und ein Zeitrelais vorgesehen ist um die genannte Ausschaltung zu verzögern.